# FASCICULE DE BREVET EUROPEEN

(11) **EP 2 177 446 B1**
(45) Date de publication et mention de la délivrance du brevet: **20.07.2011**
(21) Numéro de dépôt: 09172987.1
(22) Date de dépôt: 14.10.2009
(51) Int. Cl.: B65D 33/00, B65G 51/06, B65D 33/16, B65D 33/20

(54) **Enveloppe étanche pour tube**
Luftdichter Umschlag für Rohrleitung
Pneumatic tube airtight envelope

(30) Priorité: 15.10.2008 FR 0856989
(43) Date de publication de la demande: 21.04.2010
(73) Titulaire: Decomatic S.A., 38290 La Verpillière (FR)
(72) Inventeur: Allegre, Jean-Luc, 38460 Trept (FR)
(74) Mandataire: Thibault, Jean-Marc

(56) Documents cités:
- EP-A- 0 034 940
- FR-A- 2 859 987
- FR-A- 2 876 084
- FR-A- 2 878 510

## Description

La présente invention se rapporte au domaine technique général des emballages destinés au transport d'articles.

Plus particulièrement, l'invention se rapporte au domaine des emballages souples et étanches destinés au transport d'articles tels que par exemple des produits pharmaceutiques ou des échantillons biologiques à l'intérieur de réseaux pneumatiques.

De manière usuelle, de tels réseaux pneumatiques utilisent comme contenant des cartouches en matériau rigide. Cependant, ces cartouches ont un prix de revient important, elles sont encombrantes et elles ont tendance à s'accumuler à certains points du réseau si les flux physiques ne sont pas homogènes.

Pour remédier à ces inconvénients, le brevet FR 2 859 987 propose une enveloppe à usage unique et à bas prix de revient adaptée pour transporter des articles sur des réseaux pneumatiques. Une telle enveloppe comporte un film ou une gaine de plastique conformée pour présenter à l'une au moins de ses extrémités une partie faisant office de soufflet apte à assurer la propulsion de l'enveloppe sous l'effet de l'envoi de l'air comprimé du réseau.

Il est connu aussi par le document FR 2 876 084, une enveloppe de transport comportant un sac muni à une extrémité d'un soufflet. Chaque face du sac est pourvue à partir de son extrémité munie du soufflet d'une poche de propulsion par l'air comprimé du réseau de transport.

Lors du convoyage, le frottement continu du sac en plastique souple contre les parois du réseau pneumatique peut aboutir à une perte d'étanchéité voire à une déchirure de l'enveloppe. Au vu des articles transportés - échantillons biologiques potentiellement contaminés et/ou à expertiser, produits chimiques, etc., il est nécessaire de maintenir cette étanchéité tout au long du processus de convoyage pour éviter l'exposition du personnel à des agents biologiques potentiellement dangereux d'une part, et la contamination de l'ensemble du réseau d'autre part. En outre, il est nécessaire de préserver l'intégrité de l'article convoyé, par exemple pour ne pas fausser une analyse ultérieure.

Il est également connu par le document EP 0 034 940, un sac de transport comportant des ailettes de propulsion dépassant de l'extrémité aval du sac. Les films des faces recto et verso du sac de transport dépassent de l'extrémité amont du sac en étant incurvés vers l'intérieur pour faciliter la progression du sac dans le réseau de transport. Toutefois, cette solution n'apporte aucune solution au problème de l'abrasion des emballages plastiques souples contre les parois du réseau pneumatique de transport.

L'objet de l'invention vise à remédier aux inconvénients de l'état de la technique en proposant une enveloppe étanche économique et capable de résister à l'abrasion des parois du réseau pneumatique.

A cette fin, une enveloppe étanche selon l'invention est destinée à transporter des articles à l'intérieur d'un réseau d'air comprimé selon au moins une direction déterminée de déplacement. Elle comporte un sac réalisé à partir d'au moins une feuille de matière plastique souple soudée délimitant un volume interne accessible par au moins un passage d'accès obturable par un moyen de fermeture, ledit sac possédant une face recto et une face verso délimitées par deux bords longitudinaux opposés reliés entre eux par un bord transversal à au moins un soufflet de fond reliant la face recto et la face verso pour délimiter avec chaque face un bord transversal de fond opposé au bord transversal, et comporte au moins deux films de protection rapportés respectivement sur la face recto et sur la face verso. Selon l'invention, les films de protection de l'enveloppe sont fixés au moins aux bords longitudinaux du sac au moins à partir du bord transversal de fond, et chaque film de protection dépasse du bord transversal de fond selon une longueur supérieure à 1 mm et avantageusement comprise entre 1 et 50 mm et préférentiellement comprise entre 2 et 10 mm.

De plus, une enveloppe étanche selon l'invention peut présenter en combinaison au moins l'une des caractéristiques additionnelles suivantes :
- chaque film de protection est délimité par une bordure transversale amont, une bordure transversale aval et deux bordures longitudinales opposées,
- les bordures longitudinales des deux films de protection sont préférentiellement fixées deux à deux au moins sur la longueur comprise entre les bords transversaux de fond et les bordures transversales amont,
- au moins les bordures longitudinales de chaque film de protection sont fixées par soudure sur la face du sac correspondante,
- chaque film de protection comporte au moins une soudure de fixation transversale qui s'étend entre un bord longitudinal et l'autre,
- au moins un film de protection s'étend jusqu'au bord transversal du sac,
- au moins une soudure de fixation transversale d'un film de protection est réalisée par la soudure transversale de l'enveloppe,
- les films de protection sont fixés aux bords longitudinaux du sac au moins par des soudures longitudinales du sac,
- les films de protection sont fixés sur les faces correspondantes par collage total ou partiel,
- au moins un moyen de fermeture comporte de la colle interposée entre un support et une bande de protection détachable, de manière à ce qu'après l'enlèvement de la bande de protection et le rabattement du moyen de fermeture sur l'enveloppe, la colle entoure complètement au moins un passage d'accès,
- le moyen de fermeture est rapporté par une zone encollée ou par une soudure sur une face du sac,
- le moyen de fermeture est rapporté par une zone encollée ou par une soudure sur l'un des films de protection,
- au moins un moyen de fermeture comporte de la colle interposée entre l'un des films de protection ou l'une des faces du sac et une bande de protection détachable, de manière à ce qu'après l'enlèvement de la bande de protection et le rabattement du moyen de fermeture sur l'enveloppe, la colle entoure complètement au moins un passage d'accès,
- le film de protection sur lequel le moyen de fermeture est rapporté et la face correspondante délimitent une poche apte à être obturée par le moyen de fermeture,
- l'enveloppe comporte au moins une encoche d'ouverture facile située sur le sac, de préférence au niveau d'un bord longitudinal, et entourée par au moins une soudure, de préférence une soudure longitudinale,
- chaque film de protection est fixé aux bords longitudinaux jusqu'à sa bordure transversale aval,
- l'enveloppe comporte un second soufflet opposé au soufflet de fond et délimitant le bord transversal.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective d'un éclaté d'une enveloppe étanche selon l'invention.
La **Figure 2** est une vue de ¾ de l'enveloppe de la **Fig. 1** assemblée.
La **Figure 3** est une vue en coupe de l'enveloppe de la **Fig. 1**, selon le plan de coupe A-A défini **Fig. 2**.
Les **Figures 4A** à **4D** sont des vues partielles en coupe de dispositifs de fermeture selon divers modes de réalisation.

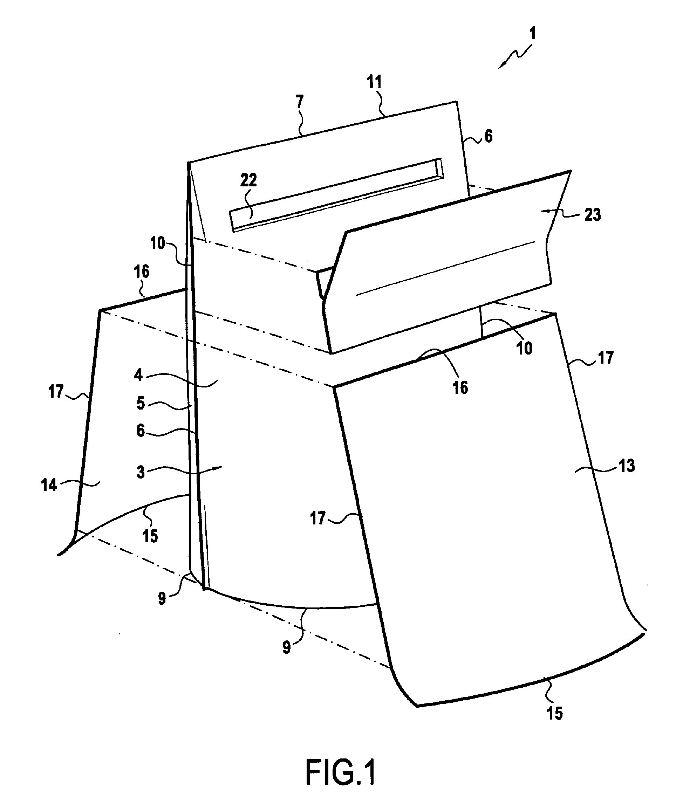

Les **Fig. 1** à **3** représentent un exemple de réalisation d'une enveloppe étanche **1** selon l'invention. Cette enveloppe **1** est destinée à contenir des articles de toute nature tels que par exemple des produits pharmaceutiques ou des échantillons biologiques, représentés de façon schématique par la référence **2**. Un tel emballage est destiné à être introduit à l'intérieur d'un réseau pneumatique non représenté mais connu en soi pour permettre le transport des articles **2** d'un lieu à un autre. De manière usuelle, l'organe de transport du réseau pneumatique est généralement un tube.

L'enveloppe **1** se présente sous la forme d'un sac **3** réalisé à partir d'au moins une feuille de matière souple et de préférence recyclable, telle que le polyéthylène. Le sac **3** possède une face dite recto **4** et une face dite verso **5**, délimitées par deux bords longitudinaux opposés **6** reliés entre eux par un bord transversal **7** et un soufflet de fond **8** reliant la face recto **4** et la face verso **5** pour délimiter avec chaque face un bord transversal de fond **9** opposé au bord transversal **7**.

Dans l'exemple de réalisation ci-dessus, l'enveloppe **1** est représentée comme ayant une forme substantiellement rectangulaire, les bords longitudinaux **6** étant sensiblement parallèles entre eux et les bords transversaux de fond **9** étant sensiblement parallèles au bord transversal **7**. Bien entendu, l'enveloppe **1** peut présenter d'autres formes, par exemple une forme trapézoïdale ou une forme sensiblement rectangulaire avec au moins un angle arrondi. Dans le même sens, l'enveloppe **1** peut comporter en outre un second soufflet opposé au soufflet de fond **8**. Le bord transversal **7** se définit alors comme le bord délimité par le second soufflet et chaque face **4**, **5**. Cette caractéristique est avantageuse car elle permet d'obtenir une enveloppe réversible, c'est-à-dire capable de parcourir le réseau pneumatique dans les deux sens ou d'être introduite dans le tube dans n'importe quel sens.

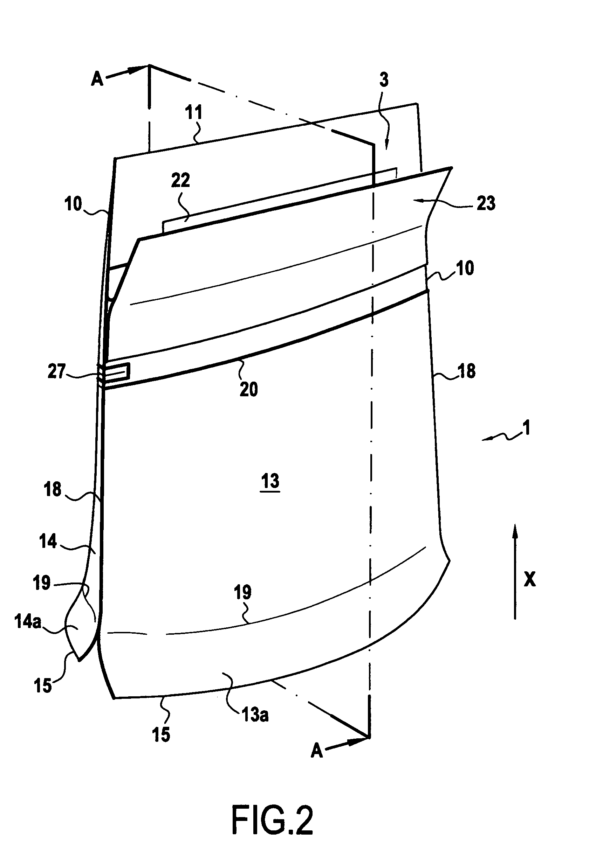

Le soufflet de fond **8** est destiné à être déplié manuellement par l'utilisateur avant l'insertion de l'enveloppe dans le réseau pneumatique, de manière à épouser la paroi intérieure du tube et à permettre le déplacement de l'enveloppe selon une direction déterminée de déplacement **X** (**Fig. 2**). Ainsi, par rapport au sens de déplacement **X** de l'enveloppe, le bord transversal **7** est dit aval tandis que les bords transversaux de fond **9** délimitant le soufflet de fond **8** sont dits amonts.

Dans l'exemple de réalisation illustré, le sac **3** est obtenu à partir du pliage d'au moins une feuille permettant de réaliser aussi le soufflet de fond **8**. Les bords longitudinaux **6** sont fermés au moyen de deux soudures longitudinales **10**, tandis que le bord transversal **7** est fermé au moyen d'une soudure transversale **11**. Les faces **4** et **5**, les soudures **10** et **11** et le soufflet de fond **8** délimitent un volume interne **12** fermé étanche.

Bien entendu, le sac **3** peut être réalisé différemment comme par le soudage d'au moins deux feuilles superposées. Dans le même sens, le soufflet de fond **8** peut être rapporté sur le sac **3** au moyen d'au moins une soudure.

L'enveloppe **1** est en outre pourvue d'au moins deux films de protection **13**, **14** rapportés respectivement sur la face recto **4** et sur la face verso **5**. Les deux films **13**, **14** peuvent se présenter soit sous la forme de deux feuilles séparées soit sous la forme d'une feuille unique mise en forme, telle que par exemple une gaine disposée autour du sac **3** lors de la fabrication de l'enveloppe **1** puis conformée.

Dans l'exemple de réalisation illustré, chaque film de protection **13**, **14** est délimité par une bordure transversale amont **15**, une bordure transversale aval **16** opposée à la bordure transversale amont **15** et deux bordures longitudinales **17** opposées. Les termes « amont » et « aval » sont définis relativement à la direction de déplacement **X** de l'enveloppe **1** dans le réseau pneumatique.

Chaque film de protection **13**, **14** a préférentiellement une forme sensiblement similaire à la forme de l'enveloppe **1**. Dans cet exemple, chaque film de protection **13**, **14** a une forme sensiblement rectangulaire, les bordures longitudinales **17** étant sensiblement parallèles entre elles de même que les bordures transversales amont **15** et aval **16**. Bien entendu, les films de protection **13**, **14** peuvent présenter d'autres formes.

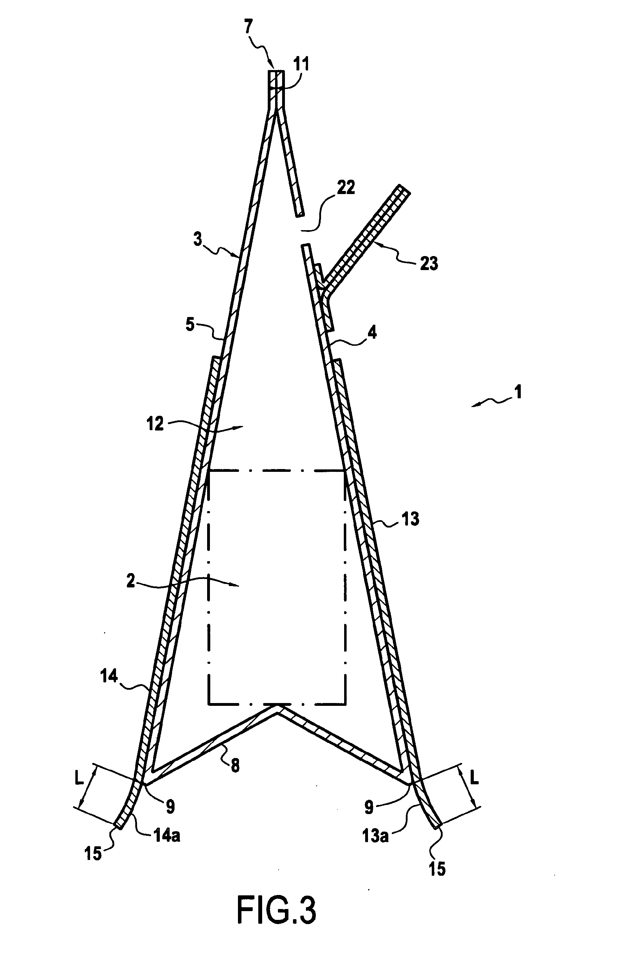

Conformément à l'invention, les films de protection **13**, **14** sont fixés au moins aux bords longitudinaux 6 du sac au moins à partir du bord transversal de fond **9** et présentent chacun une portion de jupe **13a**, **14a** s'étendant en saillie depuis le bord transversal de fond **9** jusqu'à la bordure transversale amont **15** de chaque film de protection **13**, **14**. En outre, chaque portion de jupe **13a**, **14a** est libre et dépasse du bord transversal de fond **9** selon une longueur **L** supérieure à 1 mm et avantageusement comprise entre 1 et 50 mm et préférentiellement comprise entre 2 et 10 mm. La longueur **L** se définit (**Fig. 3**) comme étant la longueur moyenne de film comprise entre le bord transversal de fond **9** et la bordure transversale amont **15** de chaque film de protection **13**, **14**. La longueur **L** peut être identique ou différente pour les deux films de protection **13**, **14**.

Avantageusement, ces caractéristiques permettent aux films de protection **13**, **14** de protéger le bord transversal de fond **9** tout au long du processus de convoyage. En effet, il a été observé que cette zone était particulièrement sensible à l'abrasion. Comme les portions de jupe **13a**, **14a** recouvrent les bords transversaux de fond **9**, il n'y pas de contact entre les bords transversaux de fond **9** et la paroi du tube du réseau pneumatique, ce qui évite de provoquer la formation de perforations ou de déchirures sur le sac 3 et par conséquent la perte d'étanchéité de l'enveloppe **1**.

La plage de valeur indiquée pour la valeur **L** résulte de la recherche du meilleur compromis entre l'effet technique, le surcoût de l'enveloppe **1** lié à la quantité de film supplémentaire et l'encombrement total de l'enveloppe.

Les films de protection **13**, **14** sont fixés par tout moyen approprié au sac **3** de manière à en assurer la protection. Par exemple et comme représenté sur la **Figure 2**, les films de protection **13**, **14** peuvent être fixés au sac **3** sur les bords longitudinaux **6** au moins à partir du bord transversal de fond **9** et jusqu'à la bordure transversale aval **16** de chaque film de protection **13**, **14**.

Selon une caractéristique préférentielle de réalisation, les bordures longitudinales **17** des deux films de protection **13**, **14** sont fixées deux à deux au moins sur la longueur comprise entre les bords transversaux de fond **9** et les bordures transversales amont **15**. De cette manière, les jupes **13a**, **14a** sont fixées entre elles au niveau des bordures longitudinales **17**. Cette caractéristique permet avantageusement d'empêcher le risque de retournement des portions de jupe **13a**, **14a** pendant le convoyage, ce qui provoquerait un accrochage de l'enveloppe **1** sur la paroi intérieure du tube.

Dans un mode préféré de réalisation, les films de protection **13**, **14** sont fixés sur le sac **3** par soudage.

Dans l'exemple de réalisation ci-dessus, les bordures longitudinales **17** des films de protection **13**, **14** sont fixées aux bords longitudinaux **6** du sac **3** par des soudures de fixation longitudinales **18**. Dans le cas où les jupes **13a**, **14a** sont fixées entre elles au niveau des bordures longitudinales **17**, ces bordures longitudinales **17** sont fixées entre elles par les soudures longitudinales **18**. En outre, chaque film de protection **13**, **14** peut comporter au moins une soudure de fixation transversale qui s'étend entre un bord longitudinal **6** et l'autre. Par exemple, les portions de jupes **13a**, **14a** des films de protection **13**, **14** peuvent être fixées au sac **3** par des soudures de fixation transversales amont **19** situées au niveau des bords transversaux de fond **9** et de préférence légèrement décalés par rapport à eux. De même, les bordures transversales aval **16** des films de protection **13**, **14** peuvent être fixées au sac **3** par des soudures de fixation transversales aval **20**.

Les soudures de fixation longitudinales **18**, transversales amont **19** et transversales aval **20** peuvent être continues sur l'ensemble de leur longueur, continues sur une partie seulement de leur longueur ou encore discontinues. Par exemple, les soudures de fixation longitudinales **18** peuvent se composer d'au moins deux points de soudure, le premier étant situé au niveau du bord transversal de fond **9** et de préférence légèrement décalé par rapport à celui-ci et le deuxième étant situé au niveau de la bordure transversale aval **16**.

Par ailleurs, il est avantageux de fixer les films de protection **13**, **14** sur l'enveloppe **1** au moment de la réalisation du sac **3**, et plus particulièrement au moment de la réalisation des soudures transversales **11** et/ou longitudinales **10**.

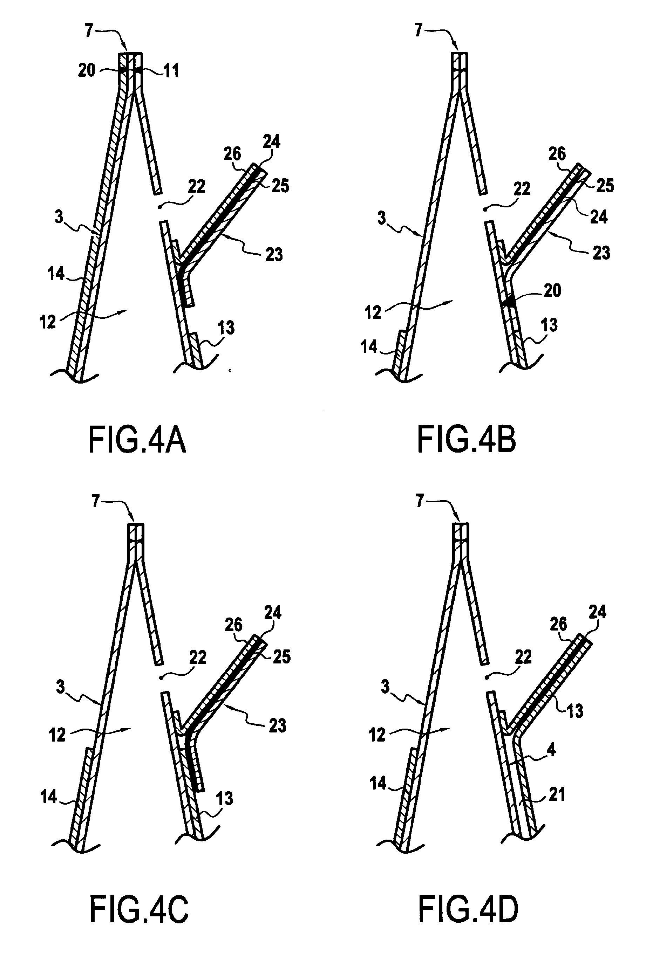

Par exemple, au moins une et de préférence les deux soudures de fixation longitudinales **18** peuvent être réalisées par les soudures longitudinales **10** du sac **3** de l'enveloppe **1**. Dans le même sens et comme représenté sur la **Fig. 4A**, au moins une soudure de fixation transversale aval **20** des films de protection **13**, **14** peut être réalisée par une soudure transversale **11** du sac **3** de l'enveloppe **1**.

Selon une variante de réalisation représentée sur la **Fig. 4D**, la soudure transversale de fixation aval **20** n'est pas réalisée sur la face recto **4**. Cela permet d'obtenir une poche **21** délimitée par la face recto **4** et le film de protection **13**. Cette poche **21** peut par exemple contenir des documents relatifs à ou aux article(s) **2** transporté(s).

Dans un autre mode de réalisation non représenté, les films **13**, **14** sont fixés sur le sac **3** par collage, de préférence au moins sur toute la longueur des bords transversaux de fond **9** et sur les bords longitudinaux **6** depuis le soufflet de fond **8** jusqu'à la bordure transversale aval **16**. Le collage peut être total, c'est-à-dire réalisé au moyen d'un film de colle réparti sur toute la surface des films de protection **13**, **14**, ou partiel, c'est-à-dire réalisé sur une partie de chaque film de protection **13**, **14**.

Le volume interne **12** du sac **3** est accessible par au moins un passage d'accès **22**, chaque passage d'accès **22** étant adapté pour permettre introduction d'au moins un article **2** à l'intérieur du volume interne **12**. Dans l'exemple illustré, le passage d'accès **22** est aménagé dans la face recto **4** mais il peut bien entendu être aménagé dans la face verso **5**.

Le passage d'accès **22** est représenté comme étant parallèle au bord transversal **7** de la face recto **4**, mais il est clair qu'un tel passage d'accès **22** peut être réalisé à n'importe quel endroit de la face recto **4** et être orienté différemment, comme par exemple parallèlement aux bords longitudinaux **6**. Par ailleurs, le passage d'accès **22** est obturable par un moyen de fermeture **23**.

Dans le cas d'une enveloppe **1** comportant plusieurs passages d'accès **22**, chaque passage d'accès **22** est destiné à être obturé par un moyen de fermeture **23**. Chaque passage d'accès **22** peut comporter son propre moyen de fermeture **23**, ou un même moyen de fermeture **23** peut être destiné à obturer plusieurs passages d'accès **22**.

Dans un mode de réalisation représenté sur les **Figs. 4A**, **4B** et **4C**, au moins un moyen de fermeture **23** se compose d'un film de colle **24** interposé entre un support **25** et une bande de protection détachable **26**, de manière qu'après l'enlèvement de la bande de protection **26** et le rabattement du moyen de fermeture **23** sur l'enveloppe **1**, le film de colle **24** entoure complètement au moins un passage d'accès **22**.

Par exemple, le support **25** peut être encollé partiellement ou sur toute sa surface et la bande de protection détachable **26** peut comporter un pli rabattu, de manière à dégager une zone encollée permettant le collage du moyen de fermeture **23** sur une face **4**, **5** (**Fig. 4A**) ou sur l'un des films de protection **13**, **14** (**Fig. 4C**).

Selon un autre exemple illustré sur la **Fig. 4B**, le support **25** peut comporter une zone non encollée apte à être soudée sur une face **4**, **5** ou sur l'un des films de protection.

Dans un autre mode de réalisation montré sur la **Fig. 4D**, au moins un moyen de fermeture **23** comporte de la colle **24** interposée entre l'un des films de protection **13**, **14** ou l'une des faces du sac **4**, **5** et une bande de protection détachable **26**, de manière qu'après l'enlèvement de la bande de protection **26** et le rabattement du moyen de fermeture **23** sur l'enveloppe 1, la colle **24** entoure complètement au moins un passage d'accès **22**.

Ce mode de réalisation est avantageux car il permet de supprimer le support **25** du moyen de fermeture **23**, ce qui permet avantageusement de ne pas rapporter d'épaisseur supplémentaire sur l'enveloppe **1** et donc de minimiser les risques de coincement dans le tube lors du convoyage.

Une autre solution pour minimiser les risques de coincement consiste à placer bord à bord le support **25** du moyen de fermeture **23** et le premier film de protection **13**, comme représenté sur la **Fig. 4B**.

Dans le même sens et comme illustré sur la **Fig. 4A**, il est également possible de prolonger au moins un film de protection **13**, **14** jusqu'au bord transversal **7** et de réaliser la ou les soudure(s) de fixation transversale(s) **20** correspondante(s) au moyen de la soudure transversale **11**.

Dans une variante non représentée de l'invention, les films de protection **13**, **14** recouvrent complètement les faces **4** et **5** du sac en s'étendant jusqu'au bord transversal **7** du sac **3**. Dans cette variante, le ou les passages d'accès **22** sont recouverts par au moins un film de protection **13**, **14** qui comporte une découpe au niveau de chaque passage d'accès **22** recouvert, de manière à permettre l'accès au volume interne **12**.

La ou les découpe(s) ainsi que le ou les moyen(s) de fermeture **23** associé(s) au(x) passage(s) d'accès **22** recouvert(s) sont adaptés par tout moyen approprié pour assurer l'étanchéité du volume interne **12** une fois le ou les passage(s) d'accès **22** obturé(s). Par exemple et de manière préférentielle, chaque film de protection **13**, **14** peut être fixé sur le sac **3** tout autour de la découpe au moyen d'au moins une soudure ou par l'intermédiaire d'un film de colle. Dans ce cas, le moyen de fermeture **23** est adapté de sorte que la colle **24** entoure complètement la découpe après l'enlèvement de la bande de protection **26** et le rabattement du moyen de fermeture **23**.

Selon différentes variantes, le moyen de fermeture **23** peut être fixé sur le film de protection **13**, **14** et/ou sur le sac **3**. La colle **24** peut également être en contact avec le film de protection **13**, **14** et/ou avec le sac **3**.

Dans une variante de l'invention représentée **Fig. 2**, le sac **3** comporte au moins une encoche **27** située de préférence au niveau d'un bord longitudinal **6**. Cette encoche est entourée par au moins une soudure, de manière à obtenir avantageusement une ouverture facile de l'enveloppe **1** par l'amorce d'une déchirure de la ou des feuille(s) souple(s) au niveau de l'encoche **27** tout en conservant l'étanchéité du volume interne **12** en raison de la ou des soudure(s) qui entourent l'encoche **27**. Cette soudure peut être intégrée dans une soudure longitudinale **10** si celle-ci est de type large. Bien entendu, il peut être envisagé d'entourer l'encoche par une soudure rapportée.

L'invention n'est pas limitée aux exemples décrits et représentés car diverses modifications peuvent y être apportées sans sortir de son cadre défini par les revendications suivantes.

## Revendications

1. Enveloppe étanche (**1**) destinée à transporter des articles (**2**) à intérieur d'un réseau d'air comprimé selon au moins une direction déterminée de déplacement, comportant :
- un sac (**3**) réalisé à partir d'au moins une feuille de matière plastique souple soudée délimitant un volume interne (**12**) accessible par au moins un passage d'accès (**22**) obturable par un moyen de fermeture (**23**), ledit sac (**3**) possédant une face recto **(4)** et une face verso (**5**) délimitées par deux bords longitudinaux opposés (**6**) reliés entre eux par un bord transversal (**7**) et ayant au moins un soufflet de fond (**8**) reliant la face recto (**4**) et la face verso (**5**) pour délimiter avec chaque face un bord transversal de fond (**9**) opposé au bord transversal (**7**),
- au moins deux films de protection (**13**, **14**) rapportés respectivement sur la face recto (**4**) et sur la face verso (**5**),
**caractérisée en ce que** :
- les films de protection (**13**, **14**) sont fixés au moins aux bords longitudinaux (**6**) du sac au moins à partir du bord transversal de fond (**9**),
- chaque film de protection (**13**, **14**) dépasse du bord transversal de fond (**9**) selon une longueur (**L**) supérieure à 1 mm.

2. Enveloppe étanche selon la revendication 1, **caractérisée en ce que** :
- chaque film de protection (**13**, **14**) est délimité par une bordure transversale amont (**15**), une bordure transversale aval (**16**) et deux bordures longitudinales (**17**) opposées,
- les bordures longitudinales (**17**) des deux films de protection (**13**, **14**) sont fixées deux à deux au moins sur la longueur comprise entre les bords transversaux de fond (**9**) et les bordures transversales amont (**15**).

3. Enveloppe étanche selon la revendication 1, **caractérisée en ce que** chaque film de protection (**13**, **14**) dépasse du bord transversal de fond (**9**) selon une longueur comprise entre 1 et 50 mm et préférentiellement comprise entre 2 et 10 mm.

4. Enveloppe étanche selon la revendication 1 ou 2, **caractérisée en ce qu'**au moins les bordures longitudinales (**17**) de chaque film de protection (**13**, **14**) sont fixées par soudure sur la face du sac (**3**) correspondante.

5. Enveloppe étanche selon la revendication 4, **caractérisée en ce que** les films de protection (**13**, **14**) sont fixés aux bords longitudinaux (**6**) au moins par des soudures longitudinales (**10**) du sac (**3**).

6. Enveloppe étanche selon la revendication 4, **caractérisée en ce que** chaque film de protection (**13**, **14**) comporte au moins une soudure de fixation transversale (**19**, **20**) qui s'étend entre un bord longitudinal (**6**) et l'autre.

7. Enveloppe étanche selon la revendication 1 ou 2, **caractérisée en ce qu'**au moins un film de protection (**13**, **14**) s'étend jusqu'au bord transversal (**7**) du sac (**3**).

8. Enveloppe étanche selon l'une des revendications 1 à 7, **caractérisée en ce qu'**au moins un moyen de fermeture (**23**) comporte de la colle (**24**) interposée entre un support (**25**) et une bande de protection détachable (**26**), de manière à ce qu'après l'enlèvement de la bande de protection (**26**) et le rabattement du moyen de fermeture (**23**) sur l'enveloppe (**1**), la colle (**24**) entoure complètement au moins un passage d'accès (**22**).

9. Enveloppe étanche selon la revendication 8, **caractérisée en ce que** le moyen de fermeture (**23**) est rapporté par une zone encollée ou par une soudure sur une face (**4**, **5**) ou sur l'un des films de protection (**13**, **14**).

10. Enveloppe étanche selon la revendication 9, **caractérisée en ce que** le film de protection sur lequel le moyen de fermeture (**23**) est rapporté et la face correspondante délimitent une poche (**21**) apte à être obturée par le moyen de fermeture (**23**).

11. Enveloppe étanche selon l'une des revendications 1 à 6, **caractérisée en ce qu'**au moins un moyen de fermeture (**23**) comporte de la colle (**24**) interposée entre l'un des films de protection (**13**, **14**) ou l'une des faces du sac (**4**, **5**) et une bande de protection détachable (**26**), de manière à ce qu'après l'enlèvement de la bande de protection (**26**) et le rabattement du moyen de fermeture (**23**) sur l'enveloppe (**1**), la colle (**23**) entoure complètement au moins un passage d'accès (**22**).

12. Enveloppe étanche selon l'une des revendications 1 à 11, **caractérisée en ce que** l'enveloppe comporte au moins une encoche (**27**) d'ouverture facile située sur le sac (**3**), de préférence au niveau d'un bord longitudinal (**6**), et entourée par au moins une soudure, de préférence une soudure longitudinale (**10**).

13. Enveloppe étanche selon l'une des revendications 1 à 12, **caractérisée en ce que** chaque film de protection (**13**, **14**) est fixé aux bords longitudinaux (**10**) jusqu'à sa bordure transversale aval (**16**).

14. Enveloppe étanche selon la revendication 1, **caractérisée en ce qu'**elle comporte un second soufflet opposé au soufflet de fond (**8**) et délimitant le bord transversal (**7**).

15. Enveloppe étanche selon la revendication 1, **caractérisée en ce que** les films de protection (**13**, **14**) sont fixés sur les faces correspondantes (**4**, **5**) par collage total ou partiel.

## Claims

1. A sealed envelope (1) intended to transport items (2) inside a compressed air network along at least one determined direction of displacement, including:
- a bag (3) made from at least one welded flexible plastic sheet delimiting an inner volume (12) accessible through at least one access passage (22) which may be obturated by a closure means (23), said bag (3) having a front face (4) and a rear face (5) delimited by two opposite longitudinal edges (6) connected to each other by a transverse edge (7) and having at least one bottom gusset (8) connecting the front face(4) and the rear face (5) for delimiting with each face a transverse bottom edge (9) opposite to the transverse edge (7),
- at least two protective films (13, 14) respectively added to the front face (4) and the rear face (5),
**characterized in that**:
- the protective films (13, 14) are attached to at least the longitudinal edges (6) of the bag at least from the transverse bottom edge (9),
- each protective film (13, 14) juts out from the transverse bottom edge (9) along a length (L) greater than 1 mm.

2. The sealed envelope according to claim 1, **characterized in that**:
- each protective film (13, 14) is delimited by an upstream transverse edge (15), a downstream transverse edge (16) and two opposite longitudinal edges (17),
- the longitudinal edges (17) of the two protective films (13, 14) are attached two by two, at least over the length comprised between the transverse bottom edges (9) and the upstream transverse edges (15).

3. The sealed envelope according to claim 1, **characterized in that** each protective film (13, 14) juts out from the transverse bottom edge (9) according to a length comprised between 1 and 50 mm and preferentially comprised between 2 and 10 mm.

4. The sealed envelope according to claim 1 or 2, **characterized in that** at least the longitudinal edges (17) of each protective film (13, 14) are attached by welding on the corresponding face of the bag (3).

5. The sealed envelope according to claim 4, **characterized in that** the protective films (13, 14) are attached to the longitudinal edges (6) at least by longitudinal welds (10) of the bag (3).

6. The sealed envelope according to claim 4, **characterized in that** each protective film (13, 14) includes at least one transverse attachment weld (19, 20), which extends between one longitudinal edge (6) and the other.

7. The sealed envelope according to claim 1 or 2, **characterized in that** at least one protective film (13, 14) extends as far as the transverse edge (7) of the bag (3).

8. The sealed envelope according to one of claims 1 to 7, **characterized in that** at least one closure means (23) includes an adhesive (24) interposed between a support (25) and a detachable protective tape (26), so that after removing the protective tape (26) and folding back the closure means (23) onto the envelope (1), the adhesive (24) completely surrounds at least one access passage (22).

9. The sealed envelope according to claim 8, **characterized in that** the closure means (23) is added by a sized area or by a weld on one face (4, 5) or on one of the protective films (13, 14).

10. The sealed envelope according to claim 9, **characterized in that** the protective film (13, 14) on which the closure means (23) is added and the corresponding face delimit a pocket (21) capable of being obturated by the closure means (23).

11. The sealed envelope according to one of claims 1 to 6, **characterized in that** at least one closure means (23) includes an adhesive (24) interposed between the one of the protective films (13, 14), or one of the faces of the bag (4,5) and a detachable protective tape (26), so that after removing the protective tape (26) and folding back the closure means (23) on the envelope (1), the adhesive (24) completely surrounds at least one access passage (22).

12. The sealed envelope according to one of claims 1 to 11, **characterized in that** the envelope includes at least one notch (27) for easy opening, located on the bag (3), preferably at a longitudinally edge (6), and surrounded by at least one weld, preferably a longitudinal weld (10).

13. The sealed envelope according to one of claims 1 to 12, **characterized in that** each protective film (13, 14) is attached to the longitudinal edges (6) as far as its downstream transverse edge (16).

14. The sealed envelope according to claim 1, **characterized in that** it includes a second gusset opposite to the bottom gusset (8) and delimiting the transverse edge (7).

15. The sealed envelope according to claim 1, **characterized in that** the protective films (13, 14) are attached on the corresponding faces (4, 5) by total or partial adhesive bonding.

## Patentansprüche

1. Dichte Hülle (1), die für die Beförderung von Artikeln (2) innerhalb eines Druckluftnetzes in wenigstens einer bestimmten Bewegungsrichtung bestimmt ist, umfassend:
- einen Beutel (3), der aus wenigstens einer flexiblen, geschweißten Kunststoffolie gefertigt ist, die einen Innenraum (12) umgrenzt, welcher über wenigstens einen durch ein Verschlußmittel (23) verschließbaren Zugangsdurchgang (22) zugänglich ist, wobei der Beutel (3) eine Vorderseite (4) und eine Rückseite (5) besitzt, die durch zwei gegenüberliegende Längskanten (6), welche über eine Querkante (7) untereinander verbunden sind, begrenzt sind, und wenigstens einen die Vorderseite (4) und die Rückseite (5) verbindenden bodenseitigen Balg (8) aufweist, um mit jeder Seite eine der Querkante (7) gegenüberliegende bodenseitige Querkante (9) zu begrenzen,
- wenigstens zwei Schutzfilme (13, 14), die auf die Vorderseite (4) bzw. auf die Rückseite (5) aufgebracht sind,
**dadurch gekennzeichnet, daß**:
- die Schutzfilme (13, 14) wenigstens an den Längskanten (6) des Beutels wenigstens von der bodenseitigen Querkante (9) ausgehend befestigt sind,
- jeder Schutzfilm (13, 14) über die bodenseitige Querkante (9) um eine Länge (L) vom mehr als 1 mm hinausragt.

2. Dichte Hülle nach Anspruch 1, **dadurch gekennzeichnet, daß**:
- jeder Schutzfilm (13, 14) durch einen stromaufwärtigen Querrand (15), einen stromabwärtigen Querrand (16) und zwei gegenüberliegende Längsränder (17) begrenzt ist,
- die Längsränder (17) der beiden Schutzfilme (13, 14) paarweise wenigstens über die Länge zwischen den bodenseitigen Querkanten (9) und den stromaufwärtigen Querrändern (15) befestigt sind.

3. Dichte Hülle nach Anspruch 1, **dadurch gekennzeichnet, daß** jeder Schutzfilm (13, 14) über die bodenseitige Querkante (9) um eine Länge zwischen 1 und 50 mm und vorzugsweise zwischen 2 und 10 mm hinausragt.

4. Dichte Hülle nach Anspruch 1 oder 2, **dadurch gekennzeichnet, daß** wenigstens die Längsränder (17) jedes Schutzfilms (13, 14) an der entsprechenden Seite des Beutels (3) festgeschweißt sind.

5. Dichte Hülle nach Anspruch 4, **dadurch gekennzeichnet, daß** die Schutzfilme (13, 14) an den Längskanten (6) wenigstens durch Längsschweißnähte (10) des Beutels (3) befestigt sind.

6. Dichte Hülle nach Anspruch 4, **dadurch gekennzeichnet, daß** jeder Schutzfilm (13, 14) wenigstens eine querverlaufende Befestigungsschweißnaht (19, 20) aufweist, die sich zwischen einer Längskante (6) und der anderen erstreckt.

7. Dichte Hülle nach Anspruch 1 oder 2, **dadurch gekennzeichnet, daß** wenigstens ein Schutzfilm (13, 14) sich bis zur Querkante (7) des Beutels (3) erstreckt.

8. Dichte Hülle nach einem der Ansprüche 1 bis 7, **dadurch gekennzeichnet, daß** wenigstens ein Verschlußmittel (23) Kleber (24) umfaßt, der zwischen einem Träger (25) und einem abziehbaren Schutzstreifen (26) eingebracht ist, so daß nach dem Entfernen des Schutzstreifens (26) und dem Herunterklappen des Verschlußmittels (23) auf die Hülle (1) der Kleber (24) wenigstens einen Zugangsdurchgang (22) vollständig umgibt.

9. Dichte Hülle nach Anspruch 8, **dadurch gekennzeichnet, daß** das Verschlußmittel (23) durch einen Klebebereich oder über eine Schweißnaht an eine Seite (4, 5) oder an einen der Schutzfilme (13, 14) angesetzt ist.

10. Dichte Hülle nach Anspruch 9, **dadurch gekennzeichnet, daß** der Schutzfilm, an den das Verschlußmittel (23) angesetzt ist, und die entsprechende Seite eine Tasche (21) umgrenzen, die geeignet ist, durch das Verschlußmittel (23) verschlossen zu werden.

11. Dichte Hülle nach einem der Ansprüche 1 bis 6, **dadurch gekennzeichnet, daß** wenigstens ein Verschlußmittel (23) Kleber (24) umfaßt, der zwischen einem der Schutzfilme (13, 14) oder einer der Seiten des Beutels (4, 5) und einem abziehbaren Schutzstreifen (26) eingebracht ist, so daß nach dem Entfernen des Schutzstreifens (26) und dem Herunterklappen des Verschlußmittels (23) auf die Hülle (1) der Kleber (24) wenigstens einen Zugangsdurchgang (22) vollständig umgibt.

12. Dichte Hülle nach einem der Ansprüche 1 bis 11, **dadurch gekennzeichnet, daß** die Hülle wenigstens eine Nut (27) zum leichten Öffnen umfaßt, die an dem Beutel (3), vorzugsweise im Bereich einer Längskante (6) gelegen und von wenigstens einer Schweißnaht, vorzugsweise einer Längsschweißnaht (10) umgeben ist.

13. Dichte Hülle nach einem der Ansprüche 1 bis 12, **dadurch gekennzeichnet, daß** jeder Schutzfilm (13, 14) an den Längskanten (6) bis zu seinem stromabwärtigen Querrand (16) befestigt ist.

14. Dichte Hülle nach Anspruch 1, **dadurch gekennzeichnet, daß** sie einen zweiten Balg aufweist, der dem bodenseitigen Balg (8) gegenüberliegt und die Querkante (7) begrenzt.

15. Dichte Hülle nach Anspruch 1, **dadurch gekennzeichnet, daß** die Schutzfilme (13, 14) an den entsprechenden Seiten (4, 5) vollständig oder teilweise festgeklebt sind.
